# EUROPÄISCHE PATENTSCHRIFT

(11) **EP 0 967 038 B1**
(45) Veröffentlichungstag und Bekanntmachung des Hinweises auf die Patenterteilung: **12.11.2003**
(21) Anmeldenummer: 99111761.5
(22) Anmeldetag: 18.06.1999
(51) Int. Cl.: B23B 5/18, B23Q 1/66

(54) **Vorrichtung zum spanabhebenden Bearbeiten von Werkstücken**
Device for machining by material removal of workpieces
Dispositif d' usinage de pièces par enlèvement de matière

(30) Priorität: 25.06.1998 DE 19828239
(43) Veröffentlichungstag der Anmeldung: 29.12.1999
(73) Patentinhaber: NILES-SIMMONS Industrieanlagen GmbH, 09117 Chemnitz (DE)
(72) Erfinder: Asbeck, Jochen, Dr.-Ing., 50126 Bergheim (DE)
(74) Vertreter: Cohausz & Florack

(56) Entgegenhaltungen:
- WO-A-96/17705
- DE-A- 3 834 208
- US-A- 4 761 918

## Beschreibung

Die Erfindung betrifft eine Vorrichtung zum spanabhebenden Bearbeiten von Werkstücken, insbesondere der Haupt- und/oder Pleuellagerzapfen an Kurbelwellen. Derartige Vorrichtungen sind beispielsweise aus der Veröffentlichung der PCT-Anmeldung WO 96/17705 oder der deutschen Patentschrift DE 196 26 627 C1 bekannt.

Bei der aus der DE 196 26 627 C1 bekannten Vorrichtung ist das Werkstück während der Bearbeitung in einem Werkstückträger gehalten, der mit mindestens einem Drehantrieb ausgestattet ist. Über den Drehantrieb wird das im übrigen stillstehende Werkstück während seiner Bearbeitung um seine Längsachse gedreht. Zur Bearbeitung des Werkstücks sind bei der bekannten Vorrichtung mindestens zwei Fräswerkzeuge vorgesehen, welche das Werkstück gleichzeitig bearbeiten. Sämtliche Zustellbewegungen, die beispielsweise aufgrund der Exzentrizität der zu bearbeitenden Flächen bei der Bearbeitung der Pleuellagerzapfen an Kurbelwellen erforderlich sind, werden durch jeweils separate Stellantriebe der Fräswerkzeuge ausgeführt.

Der Vorzug der aus der DE 196 26 627 C1 bekannten Vorrichtung besteht darin, daß mit hochspezialisierten Werkzeugeinheiten kurze Bearbeitungszyklen in der Vorrichtung selbst erreicht werden. Dabei werden die Bearbeitungsoperationen gleichzeitig durch mehrere Fräswerkzeuge durchgeführt. Nachteilig ist jedoch, daß bei gleichzeitiger Bearbeitung zweier Haupt- und Pleuellagerzapfen mittels zweier scheibenförmiger Fräswerkzeuge diese in Links- und Rechtsausführung ausgebildet sein müssen. Die gleichzeitige Bearbeitung zweier Haupt- oder Pleuellagerzapfen einer Kurbelwelle wirkt sich zudem ungünstig auf die Bearbeitungsgenauigkeit aus.

Aus der WO 96/17705 ist eine Vorrichtung bekannt, bei der die Bearbeitung des Werkstücks ebenfalls gleichzeitig durch zwei scheibenförmige Werkzeuge durchgeführt wird. Im Unterschied zu der zuvor erläuterten bekannten Vorrichtung sind bei der in WO 96/17705 beschriebenen Vorrichtung jedoch zwei Werkstückträger und eine Transporteinrichtung zum Transport des Werkstücks vorgesehen. Die Werkstückträger sind fluchtend zueinander und in Bezug zu vor und hinter der Vorrichtung angeordneten Fördereinrichtungen ausgerichtet, so daß die Transporteinrichtung das Werkstück in einer linearen Bewegung von der ersten Fördervorrichtung zum ersten Werkstückträger, von dort zum zweiten Werkstückträger und weiter zur zweiten Fördervorrichtung befördern kann. Die scheibenförmigen Werkzeuge sind dabei zwischen den beiden Werkstückträgern linear verfahrbar, so daß sie zunächst in einer ersten Arbeitsposition Bearbeitungen an dem im ersten Werkzeugträger eingespannten Werkstück und anschließend in einer zweiten Arbeitsstellung Bearbeitungen an dem in dem zweiten Werkstück eingespannten Werkstück durchführen können.

Zur Bearbeitung wird bei der bekannten Vorrichtung das über die erste Fördervorrichtung zu der Vorrichtung gelangende Werkstück von der Transporteinrichtung zunächst in den ersten Werkstückträger geladen. Anschließend wird das Werkstück bearbeitet, wobei die scheibenförmigen Werkzeuge ihre erste Arbeitsposition einnehmen. Nach Beendigung der ersten Bearbeitungsoperationen wird das Werkstück aus dem ersten Werkstückträger von der Transporteinrichtung entnommen und zum zweiten Werkstückträger gebracht. Anschließend werden an dem im zweiten Werkstückträger eingespannten Werkstück weitere Bearbeitungen durch die scheibenförmigen Werkzeuge durchgeführt. Während der Bearbeitungsschritte wird das Werkstück durch Drehantriebe des Werkstückträgers gedreht. Die Zustellund Längsbewegungen werden während der Bearbeitung durch die scheibenförmigen Werkzeuge ausgeführt. Sobald das Werkstück in den zweiten Werkstückträger gespannt ist, kann die Transporteinrichtung ein neues Werkstück zu dem ersten Werkstückträger bringen, so daß die scheibenförmigen Werkzeuge unmittelbar nach Beendigung der Bearbeitung an dem in dem zweiten Werkstückträger eingespannten Werkstück die Bearbeitung des neuen Werkstücks aufnehmen können.

Bei der aus der WO 96/17705 bekannten Vorrichtung ist der Materialfluß so verbessert, daß eine solche Vorrichtung in einen automatisierten Fertigungsablauf eingebunden werden kann. Allerdings muß zu diesem Zweck das Werkstück während der Bearbeitung mindestens einmal umgespannt werden. Dies bringt nicht nur das Problem der für den Umspann- und Transportvorgang benötigten zusätzlichen Bearbeitungszeit, sondern auch einen erheblichen zusätzlichen apparativen Aufwand für die Steuerung und Überwachung der Bearbeitung sowie für den automatisierten Transport der Werkstücke innerhalb der Vorrichtung mit sich.

Auch hier ist von Nachteil, daß bei gleichzeitiger Bearbeitung zweier Haupt- oder Pleuellagerzapfen einer Kurbelwelle mittels zweier scheibenförmiger Werkzeuge diese in Links- und Rechtsausführung ausgebildet sein müssen.

Die gleichzeitige Bearbeitung zweier Haupt- und Pleuellagerzapfen einer Kurbelwelle und das Umspannen der Kurbelwelle beeinflussen zudem ungünstig die Bearbeitungsgenauigkeit.

Die Aufgabe der Erfindung besteht darin, ausgehend von dem voranstehend erläuterten Stand der Technik, eine Vorrichtung der eingangs genannten Art zu schaffen, die eine hohe Bearbeitungsgenauigkeit ermöglicht.

Diese Aufgabe wird durch eine Vorrichtung zum spanabhebenden Bearbeiten von Werkstücken gelöst, die mit mindestens zwei beabstandet und parallel zueinander angeordneten Führungsbahnen, auf denen jeweils mindestens ein jeweils ein Werkstück haltender Werkstückträger von einer Übergabeposition in eine Arbeitsposition verfahrbar ist, und mit zwei scheibenförmigen Werkzeugen ausgestattet ist, von denen jedes Werkzeug auf einer zwischen den Führungsbahnen angeordneten Werkzeugführungsbahn von einer ersten Arbeitsposition, in welcher es an dem von dem von dem ersten Werkstückträger gehaltenen Werkstück arbeitet, in eine zweite Arbeitsposition verfahrbar ist, in welcher es an dem von dem zweiten Werkstückträger gehaltenen Werkstück arbeitet.

Im Unterschied zum bekannten Stand der Technik sind bei der erfindungsgemäßen Vorrichtung zwei auf jeweils einer eigenen Führungsbahn verfahrbare Werkstückträger vorgesehen. Die Werkstückträger selbst können auf diese Weise von der eigentlichen Bearbeitungsposition in eine Übergabeposition fahren, in der sie das Werkstück aufnehmen. Gleichzeitig kann jedes scheibenförmige Werkzeug zwischen den Werkstückträgern hin- und herbewegt werden, so daß es abwechselnd nacheinander an den in beiden Werkstückträgern eingespannten Werkstücken arbeiten kann. Dabei werden die während der Bearbeitung des Werkstücks gegebenenfalls erforderlichen Stellbewegungen in Längsrichtung durch den jeweiligen Werkstückträger ausgeführt, so daß auf eine entsprechende Beweglichkeit des Werkzeugs verzichtet werden kann. Wird das Werkstück während der Bearbeitung um seine Längsachse gedreht, so wird die aufgrund der Exzentrizität der Werkstücke gegebenenfalls zusätzlich erforderliche Zustellbewegung des Werkzeugs in radialer Richtung durch das Werkzeug selbst ausgeführt. Der apparative Aufwand für die Durchführung und Steuerung der Werkstückbearbeitung ist so auf ein Minimum beschränkt.

Die parallele Anordnung der Führungsbahnen ermöglicht es zudem, daß während der Bearbeitung des einen Werkstücks der jeweils andere Werkstückträger ein neues Werkstück aufnimmt und in die Bearbeitungsposition bewegt. Nach Beendigung der Bearbeitung des ersten Werkstücks steht das neu zu bearbeitende dann bereit, so daß das scheibenförmige Werkzeug lediglich zur Arbeitsposition dieses neuen Werkstücks gefahren werden muß. Währenddessen erfolgt das Ausladen des zuvor fertig bearbeiteten Werkstücks, das Beladen des betreffenden Werkstückträgers mit einem neuen Werkstück und der Transport des Werkzeugträgers mit dem neuen Werkstück in dessen Arbeitsstellung.

Aufgrund der bei der erfindungsgemäßen Vorrichtung ermöglichten, parallel durchlaufenen Abfolge einer Vielzahl von Transport-, Übergabe- und Bearbeitungsschritten sind die Verweilzeiten eines Werkstücks zwischen seiner Übergabe im eingebrachten Zustand und seiner Rückgabe im fertig bearbeiteten Zustand kurz, obwohl in der Regel jeweils nur ein scheibenförmiges Werkzeug in Eingriff mit dem jeweiligen Werkstück ist.

Bei der Ausführungsform der Erfindung stehen mehrere scheibenförmige Werkzeuge zur Verfügung, die nacheinander an demselben Werkstück arbeiten. Durch die parallele Anordnung der Werkzeugführungsbahnen und die gleichzeitige Verfahrbarkeit der Werkstückträger auf den ihnen zugeordneten Führungsbahnen ist stets gewährleistet, daß jedes scheibenförmige Werkzeug sowohl eine Arbeitsposition an der einen Führungsbahn als auch an der anderen Führungsbahn hat. Dabei können die Bearbeitungsschritte zeitversetzt so abgewickelt werden, daß bei einer entsprechenden Verkopplung des Beginns der Werkstückübergabe- und der Bearbeitungszeiten ein noch größerer Werkstückdurchsatz erreicht wird.

Sind mehr als zwei scheibenförmige Werkzeuge vorgesehen, so können deren Arbeitspositionen durch die Werkzeugträger nacheinander angefahren werden. Die weitgehende Anpassungsfähigkeit der erfindungsgemäßen Vorrichtung an verschiedenste Bearbeitungsaufgaben und geometrische Verhältnisse der zu bearbeitenden Werkstücke ist auf diese Weise stets gewährleistet.

Die erfindungsgemäße Vorrichtung ist insbesondere zum achsparallel erfolgenden Fräsen, zum orthogonal erfolgenden Fräsen und/oder zum Außenrundschleifen von Kurbel- oder Nockenwellen für den Motorenbau geeignet.

Weitere vorteilhafte Ausgestaltungen der Erfindung sind in den abhängigen Ansprüchen angegeben und werden in der nachfolgenden Beschreibung von Ausführungsbeispielen anhand einer Zeichnung näher erläutert. Es zeigen schematisch:

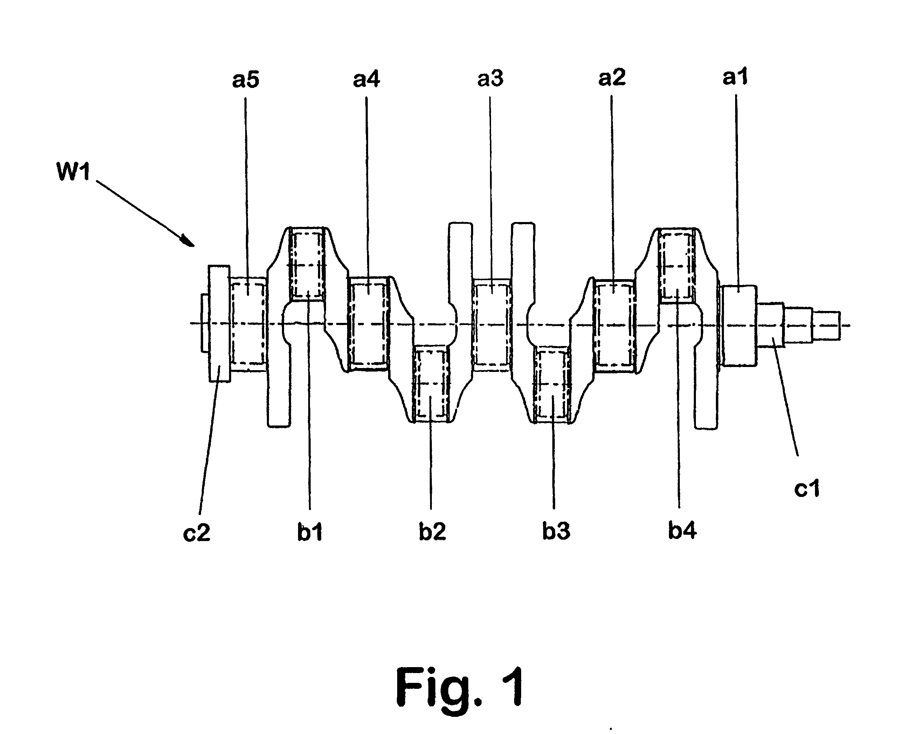

- Fig. 1: ein zu bearbeitendes Werkstück;
- Fig. 2: eine erste Ausgestaltung einer Vorrichtung zum Fräsbearbeiten von Kurbelwellen in einer Draufsicht;
- Fig. 3: die Vorrichtung nach Fig. 2 in einer frontalen Ansicht in vergrößertem Maßstab;
- Fig. 4: eine zweite Ausgestaltung einer Vorrichtung zum Fräsbearbeiten von Kurbelwellen in einer Draufsicht.

In den Figuren sind die übereinstimmenden Bauteile mit denselben Bezugsziffern bezeichnet.

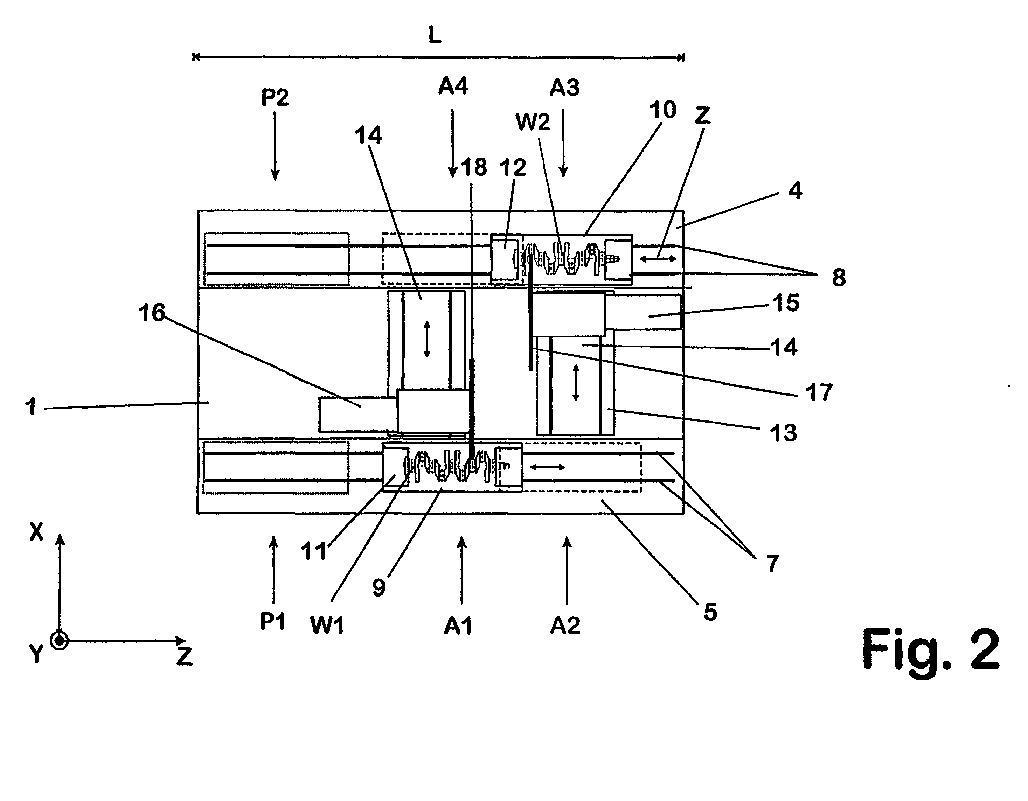

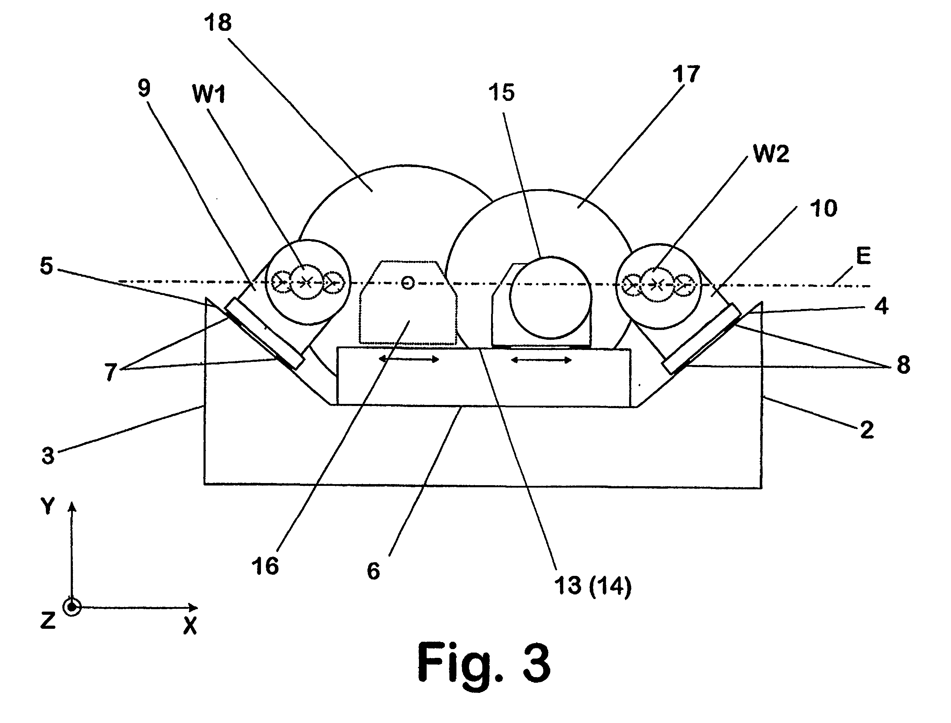

Ein zu bearbeitendes Werkstück W1, das als Kurbelwelle fünf Hauptlagerzapfen a1,a2,a3,a4,a5 und vier Pleuellagerzapfen b1,b2,b3,b4 aufweist, ist an den Enden c1,c2 und an dem ersten Hauptlagerzapfen a1 bereits fertig bearbeitet. Die Fertigbearbeitung der Haupt- und Pleuellagerzapfen a2,a3,a4,a5,b1,b2,b3,b4 erfolgt in einer Vorrichtung nach den Fig. 2 und 3.

Die in den Figuren 2 bis 4 dargestellten Vorrichtungen weisen jeweils ein Maschinenbett 1 auf, an dessen Längsseiten 2,3 jeweils eine ebene Schrägfläche 4,5 ausgebildet ist. Die Schrägflächen 4,5 sind gegeneinander geneigt und gehen in eine horizontal ausgerichtete zentrale Fläche 6 im mittleren Teil des Maschinenbetts 1 über, welche sich wie die Schrägflächen 4,5 über die gesamte Länge L des Maschinenbetts 1 erstreckt. Auf den Schrägflächen 4,5 ist parallel zu den Längsseiten 2,3 jeweils eine durch zwei Schienen gebildete linear verlaufende Führungsbahn 7,8 angeordnet, deren Länge im wesentlichen gleich der Länge L des Maschinenbetts 1 ist. Die Führungsbahnen 7,8 dienen zur Führung jeweils eines Werkstückträgers 9,10.

Jeder der Werkstückträger 9,10 ist durch im einzelnen nicht dargestellte Stelleinrichtungen auf der ihm jeweils zugeordneten Führungsbahn 7 bzw. 8 von einer Übergabeposition P1,P2 in mindestens zwei Arbeitspositionen A1, A2, A3, A4, A5, A6 verfahrbar. Zusätzlich ist jeder Werkstückträger 9,10 mit einem Spannfutter ausgestattet, in welchem ein Werkstück W1,W2,W3,W4 gespannt ist. Über jeweils einen Drehantrieb 11,12 der Werkstückträger 9,10 können die Werkstücke W1-W4 um ihre Längsachse gedreht werden.

Bei den Werkstücken W1-W4 handelt es sich in den hier erläuterten Beispielen um gleiche Kurbelwellen. Genauso können jedoch auch Nockenwellen oder andere längliche Bauteile in den erläuterten Vorrichtungen bearbeitet werden.

Jede der in den Figuren 2 bis 4 gezeigten Vorrichtungen weist zwei geradlinig ausgebildete Werkzeugführungsbahnen 13,14 auf, auf denen je eine Werkzeugeinheit 15,16 mittels nicht gezeigter Stellantriebe verfahrbar ist. Die Werkzeugführungsbahnen 13,14 sind orthogonal zu den Führungsbahnen 7,8 ausgerichtet, auf der zentralen Fläche 6 des Maschinenbetts 1 montiert und erstrecken sich im wesentlichen über die gesamte Breite dieser Fläche 6. Auf diese Weise können die Werkzeugeinheiten 15,16 und mit ihnen die von ihnen getragenen scheibenförmigen Werkzeuge 17,18 in einer linearen Bewegung auf jede der Führungsbahnen 7,8 zugestellt werden. Über einen im einzelnen ebenfalls nicht dargestellten Antrieb einer jeden Werkzeugeinheit 15,16 ist jedes Werkzeug 17,18 drehend angetrieben.

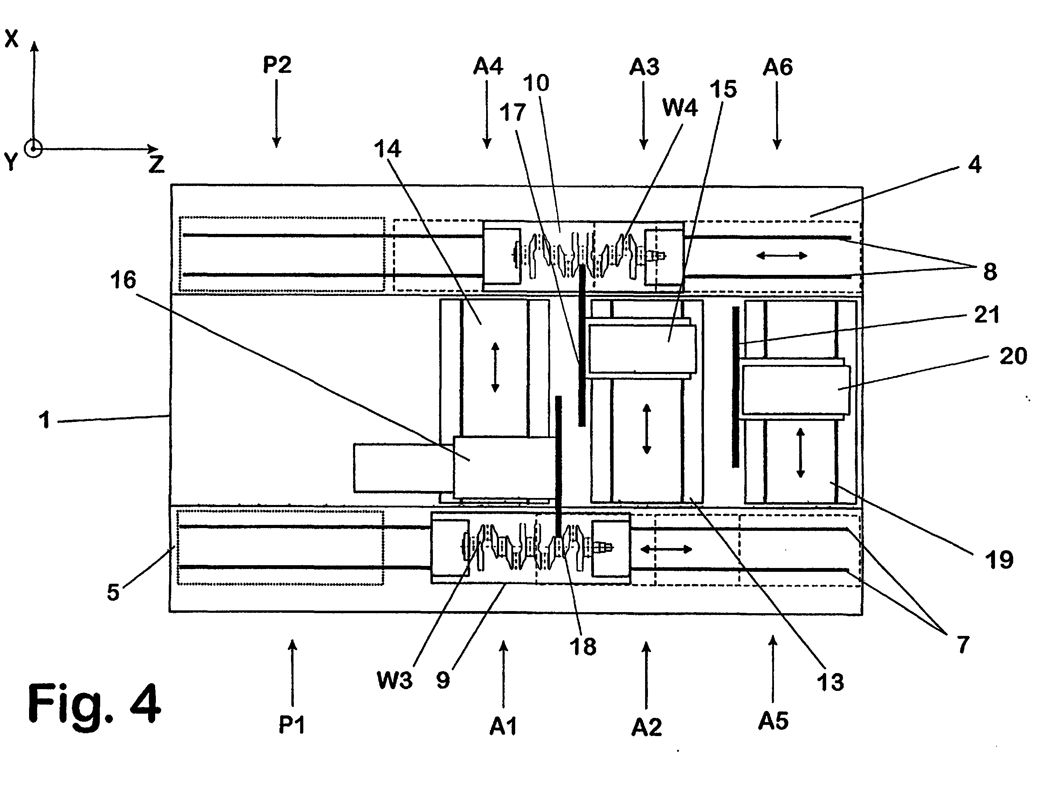

Die in den Fig. 2 und 3 dargestellte Vorrichtung hat zwei Werkzeugführungsbahnen 13,14, die in einem Abstand parallel angeordnet sind. Das Ausführungsbeispiel gemäß Fig. 4 weist zusätzlich eine dritte Werkzeugführungsbahn 19 auf, die auf der der Werkzeugführungsbahn 14 gegenüberliegenden Seite der Führungbahn 13 parallel und mit Abstand zu dieser angeordnet ist. Auf der Werkzeugführungsbahn 19 ist eine dritte Werkzeugeinheit 20 mit einem scheibenförmigen Werkzeug 21 gelagert, die ebenfalls mittels eines nicht dargestellten Stellantriebs verschiebbar ist. Die Beweglichkeit der Werkzeugeinheiten 16 und 20 entspricht der Beweglichkeit der Werkzeugeinheit 15, so daß jede der Werkzeugeinheiten 15,16,20 sowohl eine Arbeitsposition A3, A4 bzw. A6 an der Führungsbahn 8 als auch eine Arbeitsposition A1, A2 bzw. A5 an der Führungsbahn 7 erreichen kann.

Die Drehachsen der jeweiligen Werkzeuge 17,18 und 21 und die Drehachsen der auf den jeweiligen Vorrichtungen jeweils bearbeiteten Werkstücke W1-W4 liegen in einer Ebene E, so daß die Werkzeuge 17, 18 und 21 auf einfache Weise lagerichtig an die zu bearbeitenden Abschnitte der Werkstücke W1 - W4 geführt und die Bewegungen vom jeweiligen Werkzeug 17, 18, 21 und Werkstück W1 - W4 auf ebenso einfache Weise während der Bearbeitung koordiniert werden können.

Zur Bearbeitung des Werkstücks W1 wird bei der Vorrichtung gemäß Fig. 2 und 3 der Werkstückträger 9 in die Übergabeposition P1 gefahren. Dort übergibt eine nicht dargestellte Übergabeeinrichtung das zu bearbeitende Werkstück W1, welches in die Spannvorrichtung des Werkstückträgers 9 gespannt wird.

Das Werkzeug 17 bearbeitet unterdessen die Pleuellagerzapfen des Werkstücks W2, das auf dem Werkstückträger 10 eingespannt ist. Dabei wird das Werkstück W2 durch den Drehantrieb des Werkstückträgers 10 um seine Längsachse gedreht. Gleichzeitig wird durch den Stellantrieb der Werkzeugeinheit 15 das Werkzeug 17 in einer normal zur Bewegungsachse Z des Werkstückträgers 10 gerichteten Bewegungsachse X bewegt. Auf diese Weise wird die Bewegung des Werkzeugs 17 in Richtung der Bewegungsachse X der Bewegung angepaßt, die der Pleuellagerzapfen um die Längsachse des Werkstücks W2 vollführt. Nach Beendigung der Bearbeitung des ersten Pleuellagerzapfens wird das Werkstück W2 durch den Werkstückträger 10 in Richtung der Bewegungsachse Z bewegt, bis sich der als nächster zu bearbeitende Pleuellagerzapfen des Werkstücks W2 im Arbeitsbereich des Werkzeugs 17 befindet. Das Werkzeug 17 nimmt daraufhin die Bearbeitung des betreffenden Pleuellagerzapfens in der voranstehend beschriebenen Weise auf. Auf diese Weise durchlaufen nacheinander sämtliche der zu bearbeitenden Pleuellagerzapfen des Werkstücks W2 die Bearbeitung durch das Werkzeug 17.

Wird während der Bearbeitung ein Orthogonal-Fräsen durchgeführt, so übernimmt der Stellantrieb der Werkzeugeinheit 15 die notwendige Zustellung des Werkzeugs 17 in Richtung der Bewegungsachse X. Zum Achsparallel-Fräsen wird dagegen das Werkstück W2 durch den Werkstückträger 10 während der Bearbeitung in Z-Richtung bewegt.

In der Vorrichtung gemäß Fig. 2 und 3 werden gleichzeitig zwei Werkstücke W1,W2 bearbeitet. Dabei werden für das Werkstück W1 folgende Bearbeitungsschritte durchlaufen:
- Beladen des Werkstückträgers 9 mit dem Werkstück W1 in der Übergabeposition P1,
- Ausrichten und Spannen des Werkstücks W1 auf dem Werkstückträger 9,
- Verfahren des Werkstückträgers 9 zur Arbeitsposition A1,
- Bearbeitung der vier Hauptlagerzapfen a2,a3,a4,a5 des Werkstücks W1 durch das Werkzeug 18, dabei Verfahren des Werkstücks W1 durch den Werkstückträger 9 in Z-Richtung, um den jeweiligen Hauptlagerzapfen in den Arbeitsbereich des Werkzeugs 18 zu bringen,
- Verfahren des Werkstückträgers 9 zur Arbeitsposition A2,
- Bearbeitung der vier Pleuellagerzapfen b1,b2,b3,b4 des Werkstücks W1 durch das Werkzeug 17, dabei Verfahren des Werkstücks W1 durch den Werkstückträger 9 in Z-Richtung, um den jeweiligen Pleuellagerzapfen in den Arbeitsbereich des Werkzeugs 17 zu bringen,
- Verfahren des Werkstückträgers 9 zur Übergabeposition P1,
- Entladen des fertig bearbeiteten Werkstücks W1.

Für das Werkstück W2 laufen die Bearbeitungsschritte wie folgt:
- Beladen des Werkstückträgers 10 mit dem Werkstück W2 in der Übergabeposition P2,
- Ausrichten und Spannen des Werkstücks W2 auf dem Werkstückträger 10,
- Verfahren des Werkstückträgers 10 zur Arbeitsposition A3,
- Bearbeitung der vier Pleuellagerzapfen des Werkstücks W2 durch das Werkzeug 17, dabei Verfahren des Werkstücks W2 durch den Werkstückträger 10 in Z-Richtung, um den jeweiligen Pleuellagerzapfen in den Arbeitsbereich des Werkzeugs 17 zu bringen,
- Verfahren des Werkstückträgers 10 zur Arbeitsposition A4,
- Bearbeitung der vier Hauptlager des Werkstücks W2 durch das Werkzeug 18, dabei Verfahren des Werkstücks W2 durch den Werkstückträger 10 in Z-Richtung, um den jeweiligen Hauptlagerzapfen in den Arbeitsbereich des Werkzeugs 18 zu bringen,
- Verfahren des Werkstückträgers 10 zur Übergabeposition P2,
- Entladen des fertig bearbeiteten Werkstücks W2.

Aufgrund der versetzten Durchführung der einzelnen Teiloperationen der Bearbeitung werden maximale Hauptzeiten der Werkzeuge 17,18 erreicht. Die Parallelisierung der Be- und Entladeoperationen, der Bearbeitung der Hauptlagerzapfen durch das Werkzeug 18 und der Bearbeitung der Pleuellagerzapfen durch das Werkzeug 17 bewirkt, daß innerhalb der Zykluszeit für ein Werkstück W1 versetzt ein zweites Werkstück W2 komplett bearbeitet werden kann. So werden die Bearbeitungszeiten mit einer erfindungsgemäß ausgebildeten Vorrichtung gegenüber dem bekannten Stand der Technik erheblich verringert.

Bei dem Ausführungsbeispiel nach Fig. 4 werden, wie bei der Vorrichtung nach Fig. 2 und 3, zwei Werkstücke W3,W4 gleichzeitig bearbeitet. Dabei werden zusätzliche Bearbeitungsoperationen durch das Werkzeug 21 durchgeführt. Das jeweils bearbeitete Werkstück W3 bzw. W4 wird von dem jeweiligen Werkstückträger 9,10 im jeweiligen Arbeitsbereich A5, A6 des Werkzeugs 21 positioniert. Das Werkzeug 21 führt die Bearbeitung des ersten Hauptlagerzapfens a1 aus, wenn dieser bei den eingebrachten Werkstücken W3, W4 nicht fertig bearbeitet ist.

## Patentansprüche

1. Vorrichtung zum spanabhebenden Bearbeiten von Werkstücken(W1 - W4), insbesondere der Haupt- (a1 - a5) und/oder Pleuellagerzapfen (b1 - b4) an Kurbelwellen, mit zwei scheibenförmigen Werkzeugen (17,18,21), von denen jedes auf einer, zwischen mindestens zwei beabstandet und parallel zueinander angeordneten Führungsbahnen (7,8) angeordneten, Werkzeugführungsbahn (13,14,19) von einer ersten Arbeitsposition (A1,A2,A5), in welcher es an dem von einem ersten Werkstückträger (9) gehaltenen Werkstück (W1,W3) arbeitet, in eine zweite Arbeitsposition-(A3,A4,A6) verfahrbar ist, in welcher es an dem von einem zweiten Werkstückträger (10) gehaltenen Werkstück (W2,W4) arbeitet, **gekennzeichnet dadurch, dass** auf den Führungsbahnen (7,8) jeweils mindestens ein jeweils ein Werkstück (W1 - W4) haltender Werkstückträger (9,10) von einer Übergabeposition (P1,P2) in eine Arbeitsposition (A1 - A6) verfahrbar ist.

2. Vorrichtung nach Anspruch 1, **dadurch gekennzeichnet, daß** jede Werkzeugführungsbahn (13,14,19) orthogonal zu den beiden Führungsbahnen (7,8) für die Werkstückträger (9,10) ausgerichtet ist.

3. Vorrichtung nach einem der voranstehenden Ansprüche, **dadurch gekennzeichnet, daß** die Führungsbahnen (7,8) linear ausgebildet sind.

4. Vorrichtung nach einem der voranstehenden Ansprüche, **dadurch gekennzeichnet, daß** die Werkstückträger (9,10) auf der ihnen jeweils zugeordneten Führungsbahn (7,8) in mehrere Arbeitspositionen (A1 - A6) verfahrbar sind.

5. Vorrichtung nach einem der voranstehenden Ansprüche, **dadurch gekennzeichnet, daß** jeder Werkstückträger (9,10) sich während der Bearbeitung auf seiner Führungsbahn (7,8) bewegt.

6. Vorrichtung nach einem der voranstehenden Ansprüche, **dadurch gekennzeichnet, daß** mindestens eine weitere parallel zu den beiden Werkzeugführungsbahnen (13,14) ausgerichtete Werkzeugführungsbahn (19) vorgesehen ist, auf welcher ein weiteres Werkzeug (21) in Arbeitspositionen (A5,A6) verfahrbar ist, in welchen eine Bearbeitung durch das weitere Werkzeug (21) durchgeführt wird.

7. Vorrichtung nach Anspruch 6, **dadurch gekennzeichnet, daß** jeweils nur ein Werkzeug (17,18,21) an einem Werkstück (W1-W4) arbeitet.

8. Vorrichtung nach einem der voranstehenden Ansprüche, **dadurch gekennzeichnet, daß** die Führungsbahnen (7,8) auf gegeneinander geneigten Ebenen (4,5) angeordnet sind.

9. Vorrichtung nach einem der voranstehenden Ansprüche,
**dadurch gekennzeichnet, daß** jede Drehachse der Werkzeuge (17,18,21) in derselben Ebene (E) liegt wie die Drehachsen der Werkstücke (W1 - W4).

10. Vorrichtung nach einem der voranstehenden Ansprüche,
**dadurch gekennzeichnet, daß** eine Steuereinrichtung vorgesehen ist, welche die Drehbewegung des Werkstücks (W1 - W4) mit einer Zustellbewegung des Werkzeugs (17,18,21) während der Bearbeitung koordiniert.

## Claims

1. An apparatus for machining workpieces (W1 to W4) by stock removal, in particular the main (al to a5) and/or connecting rod bearing journals (b1 to b4) on crankshafts, with two discoid cutters (17, 18, 21) of which each can be moved on a cutter guideway (13, 14, 19), which is arranged between at least two guideways (7, 8), said guideways (7, 8) being distanced from one another and arranged parallel with respect to one another, from a first working position (A1, A2, A5) in which it works on the workpiece (W1, W3) held by a first workpiece fixture (9) to a second working position (A3, A4, A6) in which it works on the workpiece (W2, W4) held by a second workpiece fixture (10), **characterized in that** on the guideways (7, 8) in each case at least one workpiece fixture (9, 10), each workpiece fixture (9, 10) holding a workpiece (W1 to W4), can be moved from a transfer position (P1, P2) to a working position (A1 to A6).

2. An apparatus as claimed in claim 1, **characterized in that** each cutter guideway (13, 14, 19) is aligned orthogonally to the two guideways (7, 8) for the workpiece fixtures (9, 10).

3. An apparatus as claimed in one of the preceding claims, **characterized in that** the guideways (7, 8) are arranged linearly.

4. An apparatus as claimed in one of the preceding claims, **characterized in that** the workpiece fixtures (9, 10) are movable to several working positions (A1 to A6) on the guideways (7, 8) as assigned to the same.

5. An apparatus as claimed in one of the preceding claims, **characterized in that** each workpiece fixture (9, 10) moves on its guideway (7, 8) during the machining.

6. An apparatus as claimed in one of the preceding claims, **characterized in that** at least one further cutter guideway (19) is provided which is aligned parallel to the two cutter guideways (13, 14) and on which a further cutter (21) is movable to a working position (A5, A6) in which machining is performed by said further cutter (21).

7. An apparatus as claimed in claim 6, **characterized in that** only one cutter (17, 18, 21) at a time works on a workpiece (W1 to W4).

8. An apparatus as claimed in one of the preceding claims, **characterized in that** the guideways (7, 8) are arranged on mutually inclined planes (4, 5).

9. An apparatus as claimed in one of the preceding claims, **characterized in that** every axis of rotation of the cutters (17, 18, 21) is disposed in the same plane (E) as the axes of rotation of the workpieces (W1 to W4).

10. An apparatus as claimed in one of the preceding claims, **characterized in that** a control device is provided which coordinates the motion of rotation of the workpiece (W1 to W4) with an advance motion of the cutter (17, 18, 21) during the machining.

## Revendications

1. Dispositif d'usinage de pièces (W1 - W4) par enlèvement de copeaux, en particulier de tourillons (a1 - a5) et / ou de manetons (b1 - b4) sur des vilebrequins, avec deux outils en forme de disques (17, 18, 21), dont chacun, sur une piste de guidage d'outil (13, 14, 19) disposée entre au moins deux pistes de guidage (7, 8) disposées parallèlement et à une certaine distance l'une de l'autre, est mobile d'une première position de travail (A1, A2, A5), dans laquelle il travaille sur la pièce (W1, W3) maintenue par un premier porte-pièce (9), dans une deuxième position de travail (A3, A4, A6), dans laquelle il travaille sur la pièce (W2, W4) maintenue par un deuxième porte-pièce (10), **caractérisé en ce que** sur chacune des pistes de guidage (7, 8) au moins un porte-pièce (9, 10), qui porte respectivement une pièce, est mobile d'une position de transfert (P1, P2) dans une position de travail (A1 - A6).

2. Dispositif selon la revendication 1, **caractérisé en ce que** chaque piste de guidage d'outil (13, 14, 19) est orientée orthogonalement aux deux pistes de guidage (7, 8) pour les porte-pièce (9, 10).

3. Dispositif selon l'une quelconque des revendications pré-citées, **caractérisé en ce que** les pistes de guidage (7, 8) sont configurées linéairement.

4. Dispositif selon l'une quelconque des revendications pré-citées, **caractérisé en ce que** les porte-pièce (9, 10) sont mobiles dans plusieurs positions de travail sur les pistes de guidage (7, 8) qui leur sont respectivement affectées.

5. Dispositif selon l'une quelconque des revendications pré-citées, **caractérisé en ce que** chaque porte-pièce (9, 10) se déplace sur sa piste de guidage (7, 8) pendant l'usinage.

6. Dispositif selon l'une quelconque des revendications pré-citées, **caractérisé en ce qu'**au moins une autre piste de guidage d'outil (19) orientée parallèlement aux deux pistes de guidage d'outil (13, 14) est prévue, sur laquelle un autre outil (21) est mobile dans les positions de travail (A5, A6), dans lesquelles est effectué un usinage par l'autre outil (21).

7. Dispositif selon la revendication 6, **caractérisé en ce qu'**un seul outil (17, 18, 21) travaille à la fois sur une pièce (W1 - W4).

8. Dispositif selon l'une quelconque des revendications pré-citées, **caractérisé en ce que** les pistes de guidage (7, 8) sont disposées sur des plans (4, 5) inclinés l'un vers l'autre.

9. Dispositif selon l'une quelconque des revendications pré-citées, **caractérisé en ce que** chaque axe de rotation des outils (17, 18, 21) se trouve dans le même plan (E) que les axes de rotation des pièces (W1 - W4).

10. Dispositif selon l'une quelconque des revendications pré-citées, **caractérisé en ce qu'**un dispositif de commande est prévu, qui coordonne pendant l'usinage le mouvement de rotation de la pièce (W1 - W4) avec un mouvement d'approche de l'outil (17, 18, 21).
